# EUROPÄISCHE PATENTSCHRIFT

(11) **EP 3 944 434 B1**
(45) Veröffentlichungstag und Bekanntmachung des Hinweises auf die Patenterteilung: **03.09.2025**
(21) Anmeldenummer: 21185008.6
(22) Anmeldetag: 12.07.2021
(51) Int. Cl.: H02B 1/052

(54) **BEFESTIGUNGSVORRICHTUNG UND REIHENEINBAUGERÄT**
FASTENING EQUIPMENT AND ROW INSTALLATION DEVICE
DISPOSITIF DE FIXATION ET APPAREIL ENCASTRABLE EN SÉRIE

(30) Priorität: 22.07.2020 DE 102020209257
(43) Veröffentlichungstag der Anmeldung: 26.01.2022
(73) Patentinhaber: Siemens Aktiengesellschaft, 80333 München (DE)
(72) Erfinder: Neumeier, Michael, 93055 Regensburg (DE); Vierling, Winfried, 93073 Neutraubling (DE); Höhe, Stefan, 93161 Sinzing (DE)
(74) Vertreter: Siemens Patent Attorneys

(56) Entgegenhaltungen:
- EP-A1- 1 058 360
- EP-A1- 1 662 627
- EP-A1- 2 887 471
- CH-A- 327 468
- DE-B4- 102011 115 548
- DE-C1- 10 004 160
- GB-A- 2 514 163

## Beschreibung

Die Erfindung betrifft eine Befestigungsvorrichtung zur Befestigung eines Gehäuses eines elektrischen Reiheneinbaugerätes an einer Trag- oder Hutschiene, mit einem Verriegelungselement, welches an einer Befestigungsseite des Gehäuses montierbar und - im montierten Zustand - zwischen einer Montage-position und einer Verriegelungsposition verschiebbar ist. Ferner betrifft die Erfindung ein modulares Reiheneinbaugerät mit einer derartigen Befestigungsvorrichtung.

Elektromechanische Schutzschaltgeräte - beispielsweise Leistungsschalter, Leitungsschutzschalter, Fehlerstromschutzschalter sowie Lichtbogen- bzw. Brandschutzschalter - dienen der Überwachung sowie der Absicherung eines elektrischen Stromkreises und werden insbesondere als Schalt- und Sicherheitselemente in elektrischen Energieversorgungs- und Verteilnetzen eingesetzt. Zur Überwachung und Absicherung des elektrischen Stromkreises wird das Schutzschaltgerät über zwei oder mehrere Anschlussklemmen mit einer elektrischen Leitung des zu überwachenden Stromkreises elektrisch leitend verbunden, um bei Bedarf den elektrischen Strom in der jeweiligen überwachten Leitung zu unterbrechen. Das Schutzschaltgerät weist hierzu zumindest einen Schaltkontakt auf, der bei Auftreten eines vordefinierten Zustandes - beispielsweise bei Erfassen eines Kurzschlusses oder eines Fehlerstromes - geöffnet werden kann, um den überwachten Stromkreis vom elektrischen Leitungsnetz zu trennen. Derartige Schutzschaltgeräte sind auf dem Gebiet der Niederspannungstechnik auch als Reiheneinbaugeräte bekannt.

Leistungsschalter sind speziell für hohe Ströme ausgelegt. Ein Leitungsschutzschalter (sogenannter LS-Schalter), welcher auch als "Miniature Circuit Breaker" (MCB) bezeichnet wird, stellt in der Elektroinstallation eine sogenannte Überstromschutzeinrichtung dar und wird insbesondere im Bereich der Niederspannungsnetze eingesetzt. Leistungsschalter und Leitungsschutzschalter garantieren ein sicheres Abschalten bei Kurzschluss und schützen Verbraucher und Anlagen vor Überlast, beispielsweise vor Beschädigung der elektrischen Leitungen durch zu starke Erwärmung in Folge eines zu hohen elektrischen Stromes. Sie sind dazu ausgebildet, einen zu überwachenden Stromkreis im Falle eines Kurzschlusses oder bei Auftreten einer Überlast selbsttätig abzuschalten und damit vom übrigen Leitungsnetz zu trennen. Leistungsschalter und Leitungsschutzschalter werden daher insbesondere als Schalt- und Sicherheitselemente zur Überwachung und Absicherung eines elektrischen Stromkreises in elektrischen Energieversorgungsnetzen eingesetzt. Leitungsschutzschalter sind aus den Druckschriften DE 10 2015 217 704 A1, EP 2 980 822 A1, DE 10 2015 213 375 A1, DE 10 2013 211 539 A1 oder EP 2 685 482 B1 prinzipiell vorbekannt.

Zur Unterbrechung einer einzigen Phasenleitung wird in der Regel ein einpoliger Leitungsschutzschalter verwendet, welche üblicher Weise eine Breite von einer Teilungseinheit (entspricht ca. 18mm) aufweist. Für dreiphasige Anschlüsse werden (alternativ zu drei einpoligen Schaltgeräten) dreipolige Leitungsschutzschalter eingesetzt, welche dementsprechend eine Breite von drei Teilungseinheiten (entspricht ca. 54mm) aufweisen. Jedem der drei Phasenleiter ist dabei ein Pol, d.h. eine Schaltstelle zugeordnet. Soll zusätzlich zu den drei Phasenleitern auch noch der Neutralleiter unterbrochen werden, spricht man von vierpoligen Geräten, welche vier Schaltstellen aufweisen: drei für die drei Phasenleiter sowie einen für den gemeinsamen Neutralleiter.

Ein Fehlerstromschutzschalter ist eine Schutzeinrichtung zur Gewährleistung eines Schutzes gegen einen gefährlichen Fehlerstrom in einer elektrischen Anlage. Ein derartiger Fehlerstrom - welcher auch als Differenzstrom bezeichnet wird - tritt auf, wenn ein spannungsführendes Leitungsteil einen elektrischen Kontakt gegen Erde aufweist. Dies ist beispielsweise dann der Fall, wenn eine Person ein spannungsführendes Teil einer elektrischen Anlage berührt: in diesem Fall fließt der Strom als Fehlerstrom durch den Körper der betreffenden Person gegen die Erdung ab. Zum Schutz gegen derartige Körperströme muss der Fehlerstromschutzschalter bei Auftreten eines derartigen Fehlerstroms die elektrische Anlage schnell und sicher allpolig vom Leitungsnetz trennen. Im Allgemeinen Sprachgebrauch werden anstelle des Begriffs "Fehlerstrom-schutzschalter" auch die Begriffe FI-Schutzschalter (kurz: FI-Schalter), Differenzstromschutzschalter (kurz: DI-Schalter) oder RCD (für "Residual Current Protective Device") gleichwertig verwendet.

Lichtbogen- bzw. Brandschutzschalter werden zur Erfassung von Störlichtbögen, wie sie an einer defekten Stelle einer elektrischen Leitung - beispielsweise einer lockeren Kabelklemme oder aufgrund eines Kabelbruchs - auftreten können, verwendet. Tritt der Störlichtbogen elektrisch in Reihe zu einem elektrischen Verbraucher auf, so wird der normale Betriebsstrom im Regelfall nicht überschritten, da er durch den Verbraucher begrenzt wird. Aus diesem Grund wird der Störlichtbogen von einer herkömmlichen Überstromschutzeinrichtung, beispielsweise einer Schmelzsicherung oder eines Leitungsschutzschalters, nicht erfasst. Zur Ermittlung, ob ein Störlichtbogen vorliegt, werden durch den Brandschutzschalter sowohl der Spannungsverlauf als auch der Stromverlauf über die Zeit gemessen und hinsichtlich der für einen Störlichtbogen charakteristischen Verläufe analysiert und ausgewertet. In der (englischsprachigen) Fachliteratur werden derartige Schutzeinrichtungen zur Erfassung von Störlichtbögen als "Arc Fault Detection Device" (abgekürzt: AFDD) bezeichnet. Im nordamerikanischen Raum ist die Bezeichnung "Arc Fault Circuit Interrupter" (abgekürzt: AFCI) geläufig.

Weiterhin sind aus dem Stand der Technik auch Schaltgeräte ohne eigene Schutzfunktion bekannt. Hierunter fallen beispielsweise die sogenannten Lastschalter, Trennschalter oder Lasttrennschalter. Unter den letztgenannten werden Schaltgeräte verstanden, welche hinsichtlich ihrer Funktionalität sowohl die Anforderungen an einen Lastschalter - das Schalten unter elektrischer Last - als auch die an einen Trennschalter gestellten Anforderungen - das annähernd leistungslose Trennen elektrischer Anlagenteile - erfüllen. In Niederspannungsnetzen werden Lasttrennschalter beispielsweise zur Unterbrechung von Hauptstromkreisen im Bereich der Hauptverteilung eingesetzt.

Daneben existieren auch kombinierte Gerätebauformen, bei denen die Funktionalität eines Fehlerstrom-Schutzschalters um die Funktionalität eines Leitungsschutzschalters ergänzt wird: derartige kombinierte Schutzschaltgeräte werden im Deutschen als FI/LS oder im englischsprachigen Raum als RCBO (für Residual current operated Circuit-Breaker with Overcurrent protection) bezeichnet. Diese Kombigeräte haben im Vergleich zu getrennten Fehlerstrom- und Leitungsschutzschaltern den Vorteil, dass jeder Stromkreis seinen eigenen Fehlerstrom-Schutzschalter aufweist: Normalerweise wird ein einziger Fehlerstrom-Schutzschalter für mehrere Stromkreise verwendet. Kommt es zu einem Fehlerstrom, werden somit in Folge alle abgesicherten Stromkreise abgeschaltet. Durch den Einsatz von RCBOs wird nur der jeweils betroffene Stromkreis abgeschaltet.

Tendenziell werden immer mehr Funktionalitäten in die Geräte integriert, **d.h.** es werden kombinierte Schutzschaltgeräte entwickelt, welche den Funktionsumfang mehrerer Einzelgeräte abdecken: neben den vorstehend bereits beschriebenen FI/LS-Schutzschaltgeräten, welche den Funktionsumfang eines herkömmlichen Fehlerstromschutzschalters (FI) mit dem eines Leitungsschutzschalters (LS) kombinieren, existieren weitere Bauformen, bei denen beispielsweise die Funktionalität eines Brandschutzschalters in bestehende Geräte wie MCB, RCD oder RCBO/FILS integriert werden.

Bei der elektrischen Ausrüstung von Gebäuden wird zumeist eine Vielzahl von Schutzschaltgeräten benötigt, welche in einem sogenannten Elektroinstallationsverteiler, auch als Verteilerkasten oder kurz als Verteiler bezeichnet, zusammengefasst und nebeneinander angeordnet sind. Im Inneren des Elektroinstallationsverteilers sind zumeist Halterungen zur Strukturierung des Innenaufbaus des Verteilers sowie Stromführungssysteme zum Anschluss der elektrischen und/oder elektronischen Komponenten vorgesehen. Hierzu zählt auch die sogenannte Trag- oder Hutschiene, welche der Befestigung der Elektroinstallationsgeräte dient. Mit Hilfe der Trag- oder Hutschiene können die Elektroinstallationsgeräte auf einfache Art und Weise durch Aufstecken oder Aufschieben befestigt werden: Durch Hintergreifen eines oder mehrerer am Elektroinstallationsgerät ausgebildeten Rastelemente wird dabei eine formschlüssige Fixierung des Elektroinstallationsgeräts im Verteilerkasten erreicht. Auf diese Weise wird eine Möglichkeit zur standardisierten Befestigung der Elektroinstallationsgeräte geschaffen, wodurch die Montagekosten bei der elektrischen Ausrüstung des Elektroinstallationsverteilers deutlich reduziert werden.

Die im Elektroinstallationsverteiler an der Tragschiene befestigten Schaltgeräte weisen zur elektrischen Kontaktierung mehrere Anschlussklemmen auf. Zugangsseitig (netzseitig) können mehrere nebeneinander angeordnete Schaltgeräte mit Hilfe einer Sammelschiene kontaktiert werden. Abgangsseitig (lastseitig) sind die Anschlussklemmen zumeist als Schraubklemmen ausgebildet, in die die lastseitige Anschlussleitung eingesteckt und anschließend durch Verdrehen einer Klemmschraube geklemmt wird. Ein modulares Reiheneinbaugerät, welches mit Hilfe eines verschiebbaren, die Tragschiene hintergreifenden Rastelements an dieser befestigbar ist, ist beispielsweise aus der deutschen Offenlegungsschrift DE 10 2011 082 953 A1 vorbekannt.

Die DE 10 2011 115548 B4 zeigt eine Befestigungsvorrichtung zum Befestigen eines elektrischen Installationsgeräts an einer Tragschiene, umfassend ein Gehäuse 2 und einen als Verriegelunselement verschwenkbaren Kipphebel.

Die GB 2 514 163 A offenbart eine Vorrichtung zum Verriegeln an einer Schiene mittels einer rotierbaren Welle. Die EP 1 662 627 A1 zeigt einen Klemmvorrichtung mit einer drehbaren Nocke. Die DE 100 04 160 C1 beschreibt eine Befestigungsanordnung mit einem Schwenkriegel. Die CH 327 468 A offenbart eine Befestigungsvorrichtung für Schaltungselemente an Eisenschienen mittels einem Bügel. Die EP 1 058 360 A1 betrifft ein Befestigungssystem mit großem Spielraum. In der EP 2 887 471 A1 wird ein weiterer Befestigungsriegel gezeigt.

Bei der Montage von Reiheneinbaugeräten an der Tragschiene sind jedoch die Toleranzen - sowohl des Gerätegehäuses als auch der Tragschiene - so zu berücksichtigen, dass auch die Montage eines Gerätes mit der kleinsten zulässigen Gehäuseaussparung an einer Tragschiene mit größtem zulässigen Montagemaß ermöglicht wird. Hieraus folgt jedoch, dass in den meisten Fällen die Montage des Gerätes an der Tragschiene nicht spielfrei erfolgen kann. Hieraus ergibt sich der Nachteil, dass beim Anschließen der externen Anschlussleiter an das Reiheneinbaugerät, d.h. beim Festdrehen der Schraubklemme zum Klemmen des Anschlussleiters, das Reiheneinbaugerät aufgrund des über die Schraubklemme auf das Gehäuse übertragenen Drehmoments teilweise mitgedreht wird und anschließend schief auf der Tragschiene sitzt. Ein derartiger Schiefsitz ist dabei nicht nur aus optischen Gründen zu vermeiden, sondern erschwert auch die Montage einer Abdeckplatte des Elektroinstallationsverteilers.

Es ist deshalb die Aufgabe der vorliegenden Erfindung, eine alternative Befestigungsvorrichtung zur Befestigung eines Reiheneinbaugerätes an einer Trag- oder Hutschiene sowie ein Reiheneinbaugerät mit einer derartigen Befestigungsvorrichtung bereitzustellen, welcher die vorstehend genannten Nachteile überwindet oder zumindest verbessert.

Diese Aufgabe wird durch die erfindungsgemäße Befestigungsvorrichtung sowie das erfindungsgemäße Reiheneinbaugerät gemäß den unabhängigen Ansprüchen gelöst. Vorteilhafte Ausgestaltungen der erfindungsgemäßen Befestigungsvorrichtung bzw. des erfindungsgemäßen Reiheneinbaugerätes sind Gegenstand der abhängigen Ansprüche.

Die erfindungsgemäße Befestigungsvorrichtung zur Befestigung eines Gehäuses eines elektrischen Reiheneinbaugerätes an einer Tragschiene weist ein Verriegelungselement auf, welches an einer Befestigungsseite des Gehäuses montierbar und im montierten Zustand zwischen einer Montageposition und einer Verriegelungsposition verschiebbar ist. Weiterhin weist die Befestigungsvorrichtung eine mit dem Verriegelungselement gekoppelte, manuell betätigbare Feststelleinrichtung auf, welche zwischen einer Gelöst-Position und mehreren Feststell-Positionen verstellbar ist. In montiertem Zustand der Befestigungsvorrichtung am Reiheneinbaugeräte stützt sich die Feststelleinrichtung dabei an dessen Gehäuse ab, wodurch in den Feststellpositionen auf das Verriegelungselement eine in Richtung der Verriegelungsposition wirkende (erste) Verriegelungskraft erzeugbar ist, welche je nach Feststell-Position unterschiedlich groß ist.

Das am Reiheneinbaugerät befestigte, verschiebbare Verriegelungselement dient dazu, eine Kante der Tragschiene, welche aus Hutschiene ausgebildet sein kann, formschlüssig zu hintergreifen, um in montiertem Zustand ein Abheben des Reiheneinbaugerätes von der Tragschiene zu verhindern. Zur Montage kann das Verriegelungselement dabei von einer Montageposition, in der das Reiheneinbaugerät auf die Tragschiene aufgesetzt werden kann, in eine Verriegelungsposition, in der das Hintergreifen der Tragschiene realisiert ist, verbracht werden. Die Feststelleinrichtung dient dabei dazu, einen möglichst festen und sicheren Sitz des Reiheneinbaugerätes an der Tragschiene zu realisieren. Sie ist hierzu mit der Verriegelungseinrichtung gekoppelt und zwischen einer Gelöst-Position, in der keine Kraft auf das Verriegelungselement ausgeübt wird, und mehreren Feststellpositionen, in der die erste Verriegelungskraft auf das Verriegelungselement ausgeübt wird, verstellbar. Die Verstellung der Feststelleinrichtung kann beispielsweise manuell erfolgen.

Das Verbringen der Feststelleinrichtung von der Gelöst-Position in eine der Feststellpositionen bewirkt eine Zustellbewegung des mit der Feststelleinrichtung gekoppelten Verriegelungselements in Richtung der Tragschiene, wobei der Zustellweg, d.h. der Verfahrweg der Zustellbewegung, von der jeweiligen Feststellposition abhängig ist. Auf diese Weise ist auch die beim Auftreffen des Verriegelungselements auf die Tragschiene auftretende erste Verriegelungskraft, welche das Verriegelungselement auf die Tragschiene ausübt, von der jeweiligen Feststellposition abhängig, und damit variierbar. Somit können fertigungsbedingte Toleranzen - sowohl des Reiheneinbaugerätes als auch der Tragschiene - derart ausgeglichen werden, dass die erste Verriegelungskraft, mit der das Verriegelungselement gegen die Tragschiene drückt, einen vordefinierten, für einen Festsitz des Reiheneinbaugerätes an der Tragschiene erforderlichen Mindestwert, nicht unterschreitet.

In einer vorteilhaften Weiterbildung der Befestigungsvorrichtung weist die Feststelleinrichtung einen Keil oder Exzenter auf, welcher zwischen der Gelöst-Position und den mehreren Feststell-Positionen verstellbar ist. Bei der Verwendung eines Keils und Exzenters handelt es sich um einfach zu realisierende, technische Alternativen zur konstruktiven Ausgestaltung der Feststelleinrichtung, welche eine stufenlose Verstellung der mit dem Verriegelungselement gekoppelten Feststelleinrichtung zwischen der Gelöst-Position und den mehreren Feststellpositionen erlauben.

In einer weiteren vorteilhaften Weiterbildung der Befestigungsvorrichtung ist die Feststelleinrichtung als Rasteinrichtung ausgebildet, welche zwischen der Gelöst-Position und den mehreren Feststell-Positionen verstellbar ist. Durch Ausbildung der Feststelleinrichtung als Rasteinrichtung ist ein Verstellen in diskreten Schritten realisierbar. Darüber hinaus ist mit die Ausführungsform als Rasteinrichtung aufgrund der verwendeten Rastmittel ein zusätzlicher Formschluss realisierbar, welcher insbesondere in den Feststellpositionen eine zusätzliche Sicherheit darstellt.

In einer weiteren vorteilhaften Weiterbildung der Befestigungsvorrichtung weist die Rasteinrichtung ein Hebelelement auf, welches drehbeweglich mit dem Verriegelungselement gekoppelt ist, sich am Gehäuse abstützt und zwischen der Gelöst-Position und den mehreren Feststell-Positionen verstellbar ist, um auf das Verriegelungselement die erste Verriegelungskraft auszuüben. Ein Hebel stellt ein geeignetes konstruktives Element dar, um eine größere Bewegung mit geringerer Kraft - hier des Hebelelements - in eine kleinere Bewegung mit größerer Kraft, hier des mit der Rasteinrichtung gekoppelten Verriegelungselements - zu transferieren. Die Gelöst-Position sowie die mehreren Feststell-Positionen sind dabei mit Hilfe geeigneter Rastmittel, beispielsweise Nuten oder Kerben, in diskreten Schritten einstellbar.

In einer weiteren vorteilhaften Weiterbildung der Befestigungsvorrichtung ist das Hebelelement über ein Filmscharnier drehbeweglich mit dem Verriegelungselement gekoppelt. Ein Filmscharnier stellt eine im Spritzgussverfahren einfach zu realisierende Möglichkeit für die konstruktive Ausführung einer drehbeweglichen Kopplung des Hebelelements und des Verriegelungselements dar. Auf diese Weise ist kein zusätzlicher Montageaufwand zur Verbindung des Hebelelements mit dem Verriegelungselements erforderlich.

In einer weiteren vorteilhaften Weiterbildung weist die Befestigungsvorrichtung ein mit dem Verriegelungselement gekoppeltes Federelement zum Erzeugen einer in Richtung der Verriegelungsposition wirkenden zweiten Verriegelungskraft auf. Das Federelement stellt eine zusätzliche Möglichkeit dar, um unabhängig von der Feststelleinrichtung eine zusätzliche zweite Verriegelungskraft, welche von dem Federelement auf das Verriegelungselement ausgeübt wird und dieses ebenfalls in seine Verriegelungsposition drängt, zu erzeugen. Die zweite Verriegelungskraft dient beispielsweise dazu, bereits während des Aufschnappens des Reiheneinbaugerätes auf die Tragschiene - und damit zeitlich noch vor dem Verbringen der Feststelleinrichtung in eine der Feststellpositionen - ein Hintergreifen der Tragschiene zu ermöglichen und damit ein unbeabsichtigtes Lösen des Reiheneinbaugerätes von der Tragschiene zu verhindern. Die mit Hilfe des Federelements realisierbare zweite Verriegelungskraft ist dabei in der Regel kleiner als die mittels der Feststelleinrichtung realisierbar erste Verriegelungskraft.

Das erfindungsgemäße modulare Reiheneinbaugerät weist ein Gehäuse mit einer Frontseite, einer der Frontseite gegenüberliegenden Befestigungsseite, sowie die Front- und die Befestigungsseite verbindende Schmal- und Breitseiten auf. Weiterhin weist das Reiheneinbaugerät eine an der Befestigungsseite am Gehäuse montierte Befestigungsvorrichtung zur Befestigung des Reiheneinbaugerätes an einer Tragschiene auf, welche ihrerseits ein Verriegelungselement aufweist, das zwischen einer Montageposition und einer Verriegelungsposition verschiebbar gelagert ist. Ferner weist die Befestigungsvorrichtung eine mit dem Verriegelungselement gekoppelte, manuell betätigbare Feststelleinrichtung auf, welche sich am Gehäuse abstützt und zwischen einer Gelöst-Position und mehreren Feststell-Positionen verstellbar ist, wobei in den Feststell-positionen auf das Verriegelungselement eine in Richtung der Verriegelungsposition wirkende erste Verriegelungskraft ausgeübt wird, welche je nach Feststell-Position unterschiedlich groß ist.

Das Verbringen der Feststelleinrichtung von der Gelöst-Position in eine der Feststellpositionen bewirkt eine Zustellbewegung des mit der Feststelleinrichtung gekoppelten Verriegelungselements in Richtung der Tragschiene, wobei der Zustellweg, d.h. der Verfahrweg der Zustellbewegung, von der jeweiligen Feststellposition abhängig ist. Auf diese Weise ist auch die beim Auftreffen des Verriegelungselements auf die Tragschiene auftretende erste Verriegelungskraft, welche das Verriegelungselement auf die Tragschiene ausübt, von der jeweiligen Feststellposition abhängig, und damit variierbar. Somit können fertigungsbedingte Toleranzen - sowohl des Reiheneinbaugerätes als auch der Tragschiene - derart ausgeglichen werden, dass die erste Verriegelungskraft, mit der das Verriegelungselement gegen die Tragschiene drückt, einen vordefinierten, für einen Festsitz des Reiheneinbaugerätes an der Tragschiene erforderlichen Mindestwert nicht unterschreitet.

In einer vorteilhaften Weiterbildung des Reiheneinbaugerätes weist die Feststelleinrichtung einen Keil oder Exzenter auf, welcher zwischen der Gelöst-Position und den mehreren Feststell-Positionen verstellbar ist. Mit Hilfe eines Keils oder eines Exzenters ist eine stufenlose Verstellung der mit dem Verriegelungselement gekoppelten Feststelleinrichtung zwischen der Gelöst-Position und den mehreren Feststellpositionen realisierbar.

In einer weiteren vorteilhaften Weiterbildung des Reiheneinbaugerätes ist die Feststelleinrichtung als Rasteinrichtung ausgebildet, welche zwischen der Gelöst-Position und den mehreren Rast-Positionen verstellbar ist. Durch Ausbildung der Feststelleinrichtung als Rasteinrichtung ist ein Verstellen in diskreten Schritten realisierbar, wobei durch die verwendeten Rastmittel ein zusätzlicher Formschluss realisierbar ist.

In einer weiteren vorteilhaften Weiterbildung des Reiheneinbaugerätes weist die Rasteinrichtung ein Hebelelement auf, welches drehbeweglich mit dem Verriegelungselement gekoppelt ist, sich am Gehäuse abstützt und zwischen der Gelöst-Position und den mehreren Feststell-Positionen verstellbar ist, um auf das Verriegelungselement die erste Verriegelungskraft auszuüben. Mit Hilfe des Hebelelements kann die erforderliche erste Verriegelungskraft, beispielsweise manuell, auf einfache Art und Weise aufgebracht werden.

In einer weiteren vorteilhaften Weiterbildung weist des Reiheneinbaugerätes die Befestigungsvorrichtung ein mit dem Verriegelungselement gekoppeltes Federelement zum Erzeugen einer in Richtung der Verriegelungsposition wirkenden zweiten Verriegelungskraft auf. Durch die von dem Federelement erzeugte, unabhängig und zusätzlich auf das Verriegelungselement wirkende zweite Verriegelungskraft sind sowohl eine einfache Montage als auch ein ausreichender Festsitz des Reiheneinbaugerätes an Tragschiene realisierbar.

In einer weiteren vorteilhaften Weiterbildung des Reiheneinbaugerätes sind mehrere Befestigungsvorrichtungen an der Befestigungsseite des Gehäuses angeordnet. Auf diese Weise können auch größere, beispielsweise dreipolige oder vierpolige Reiheneinbaugeräte sicher an der Tragschiene befestigt werden.

Im Folgenden werden mehrere Ausführungsbeispiele der Befestigungsvorrichtung sowie des Reiheneinbaugerätes unter Bezug auf die beigefügten Figuren näher erläutert. In den Figuren sind:

### Figuren

- 1 bis 3: schematische Darstellungen einer Befestigungsvorrichtung sowie eines Reiheneinbaugerätes soweit aus dem Stand der Technik vorbekannt;
- Figur 4: eine schematische Darstellung eines ersten Ausführungsbeispiels der erfindungsgemäßen Befestigungsvorrichtung in perspektivischer Ansicht;
- Figuren 5 bis 7: schematische Detaildarstellungen des ersten Ausführungsbeispiels der erfindungsgemäßen Befestigungsvorrichtung in verschiedenen Montagezuständen;
- Figuren 8 bis 11: schematische Darstellungen eines ersten Ausführungsbeispiels des erfindungsgemäßen Reiheneinbaugerätes in verschiedenen Montagezuständen;
- Figur 12: schematische Detaildarstellung eines zweiten Ausführungsbeispiels der erfindungsgemäßen Befestigungsvorrichtung;
- Figuren 13 und 14: schematische Darstellungen eines dritten Ausführungsbeispiels der erfindungsgemäßen Befestigungsvorrichtung;
- Figuren 15 und 16: schematische Detaildarstellungen eines vierten und fünften Ausführungsbeispiels der erfindungsgemäßen Befestigungsvorrichtung.

In den verschiedenen Figuren der Zeichnung sind gleiche Teile stets mit dem gleichen Bezugszeichen versehen. Die Beschreibung gilt für alle Zeichnungsfiguren, in denen das entsprechende Teil ebenfalls zu erkennen ist.

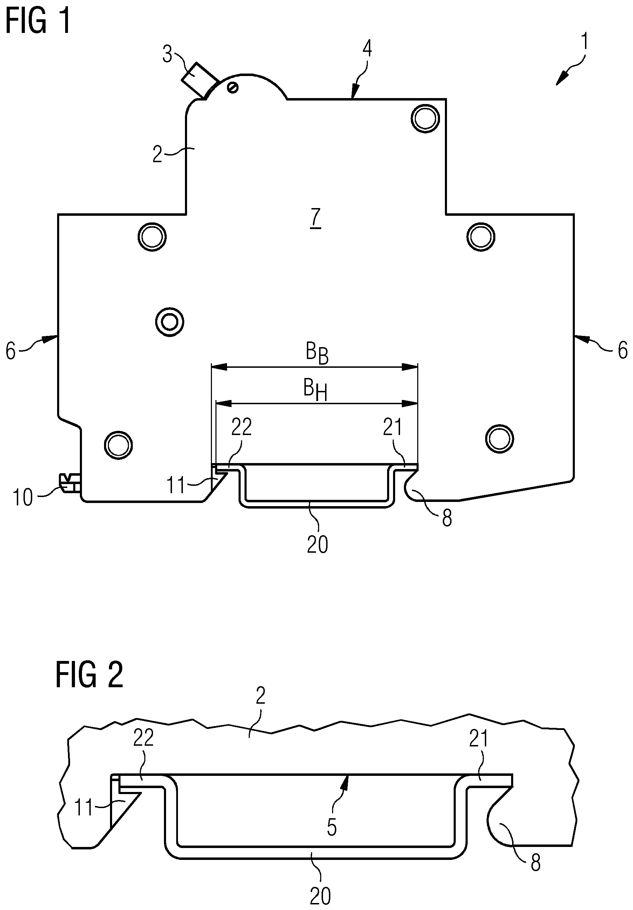

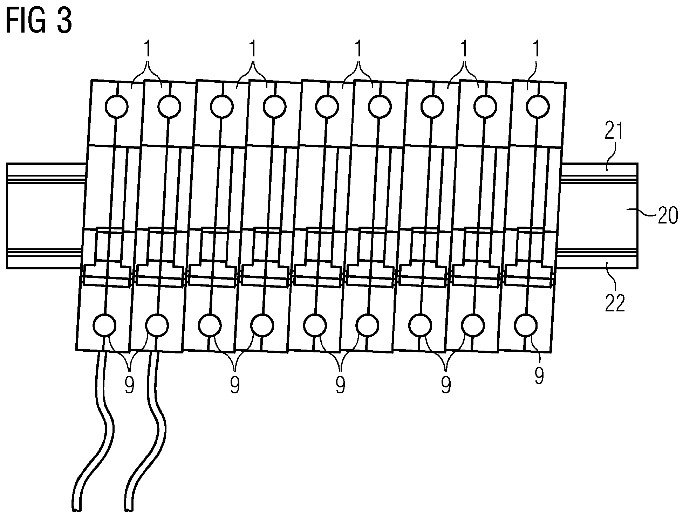

In den Figuren 1 bis 3 ist ein aus dem Stand der Technik vorbekanntes Reiheneinbaugerät 1 mit einer Befestigungsvorrichtung 10 zur Befestigung des Reiheneinbaugerätes 1 an einer Trag- oder Hutschiene 20 schematisch dargestellt. Figur 1 zeigt dabei eine Seitenansicht des an der Hutschiene 20 montierten Reiheneinbaugerätes 1, Figur 2 eine Detaildarstellung der Befestigung an der Hutschiene 20. In Figur 3 ist schließlich ein bei der Hutschienen-Montage von Reiheneinbaugeräten typischer Weise auftretendes Problem schematisch dargestellt.

Das Reiheneinbaugerät 1 weist ein Gehäuse 2 mit eine Frontseite 4, einer der Frontseite 4 gegenüberliegenden Befestigungsseite 5, sowie die Front- und die Befestigungsseite verbindenden Schmalseiten 6 und Breitseiten 7 auf. Ein Betätigungselement 3 zur manuellen Betätigung des Reiheneinbaugerätes 1 ist an dessen Frontseite 4 angeordnet. An der gegenüberliegenden Befestigungsseite 5 ist die Befestigungsvorrichtung 10 angeordnet, mittels derer das Reiheneinbaugerät 10 an der Hutschiene 20 befestigbar ist. Die Befestigungsvorrichtung 10 ist hierzu relativ zum Gehäuse 2 verschiebbar ausgebildet und weist ein Verriegelungselement 11 auf, welches zwischen einer Montageposition und einer Verriegelungsposition verschiebbar ist und in der Verriegelungsposition zum formschlüssigen Hintergreifen der Hutschiene 20 dient.

Zur Befestigung des Reiheneinbaugerätes 1 an der Hutschiene 20 wird eine an der Befestigungsseite 5 ausgebildete Haltenase 8 am ersten Schenkel 21 der Hutschiene 20 eingehängt, d.h. formschlüssig montiert. Anschließend wird das Gehäuse 2 mit der Befestigungsseite 5 bei zurückgezogenem Verriegelungselement 11 gegen die Hutschiene 20 gedrückt. Zum formschlüssigen Verrasten des Reiheneinbaugerätes 1 an der Hutschiene 20 erfolgt abschließend eine Zustellbewegung der Befestigungsvorrichtung 10 in Richtung der Hutschiene 20, wobei das Verriegelungselement 11 einen zweiten Schenkel 22 der Hutschiene 20 formschlüssig hintergreift.

In der Darstellung der Figur 1 ist gut zu erkennen, dass die Breite B_{H} der Hutschiene 20 etwas geringer bemessen ist als das entsprechende, an der Befestigungsseite 5 ausgebildete Öffnungsmaß B_{B} des Reiheneinbaugerätes 1. Das sich daraus ergebende Spiel ist konstruktiv zwingend erforderlich, um jederzeit eine sichere Montage des Reiheneinbaugerätes 1 an der Hutschiene 20 gewährleisten zu können. Allerdings tritt damit auch das in Figur 3 veranschaulichte Problem auf: wird ein elektrischer Anschlussleiter 25 mittels einer im Bereich der Schmalseite des jeweiligen Reiheneinbaugerätes 1 angeordneten Schraubklemme 9 mittels eines Schraubendrehers befestigt, so wird beim Anziehen der Klemmschraube eine Kraft auf das Gehäuse 2 ausgeübt, welche ein Verdrehen des Gehäuses 2 bewirkt, solange, bis die Hutschiene 2 diese Drehbewegung begrenzt. Die Reiheneinbaugeräte 1 sind dann allesamt schief auf der Hutschiene 20 montiert, was einerseits den optischen Eindruck beeinträchtigt, andererseits aber auch die Montage einer Abdeckung erschwert.

Alternativ dazu könnte man die Kraft, mit der das Verriegelungselement 11 gegen die Hutschiene 20 gedrückt wird, deutlich erhöhen. Hieraus ergibt sich jedoch den Nachteil, dass das Aufschnappen der Reiheneinbaugeräte 1 auf die Hutschiene 20 deutlich strenger realisiert wäre, und ein Lösen der Geräte nur noch unter Zuhilfenahme geeigneter Werkzeuge - jedoch nicht mehr manuell - erfolgen kann.

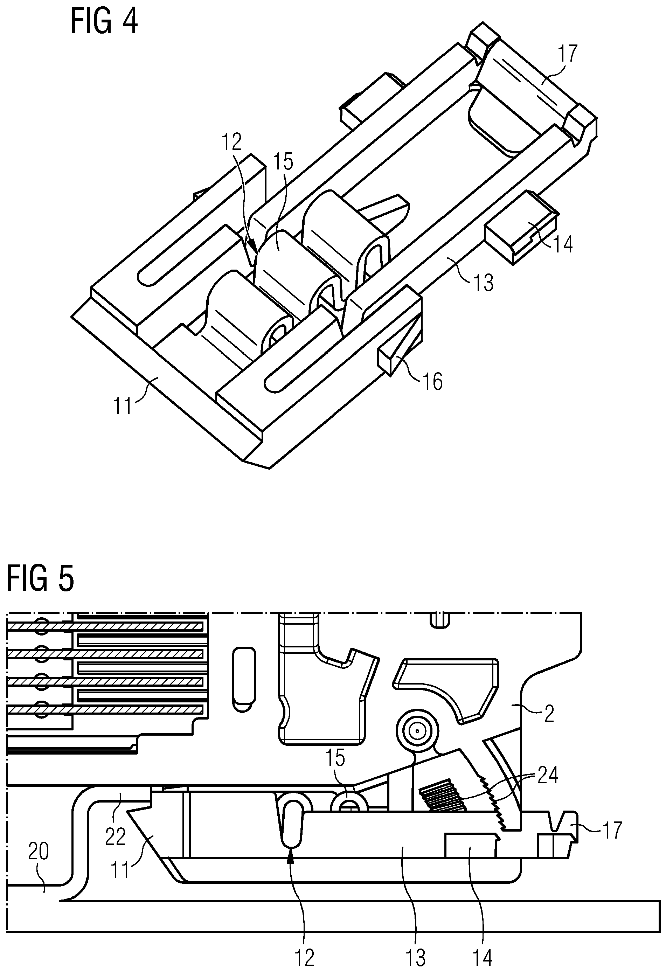

In Figur 4 ist ein erstes Ausführungsbeispiel der erfindungsgemäßen Befestigungsvorrichtung 10 in perspektivischer Ansicht schematisch dargestellt. Die Befestigungsvorrichtung 10 besteht im Wesentlichen aus einem ersten Abschnitt, an dessen Ende das Verriegelungselement 11 ausgebildet ist, sowie einem mit dem ersten Abschnitt über ein Filmscharnier 12 beweglich gekoppelten zweiten Abschnitt, welcher im Zusammenspiel mit einer hierfür geeigneten Gehäusekontur des Reiheneinbaugerätes 1 eine Feststelleinrichtung bildet und im ersten Ausführungsbeispiel als Feststellarm 13 ausgebildet ist.

Das Verriegelungselement 11 ist - relativ zum Gehäuse 2 des Reiheneinbaugerätes 1 gesehen - zwischen der Montageposition und der Verriegelungsposition verschiebbar gelagert. In der Montageposition kann das Reiheneinbaugerät 1 auf die Hutschiene 20 gesetzt werden, durch Verbringen in die Verriegelungsposition erfolgt dann das Hintergreifen des zweiten Schenkels 22 durch das Verriegelungselement 11, wodurch eine formschlüssige Befestigung des Reiheneinbaugerätes 1 an der Hutschiene 20 realisiert ist.

Die Feststelleinrichtung, im Falle des ersten Ausführungsbeispiels also der Feststellarm 13, ist erfindungsgemäß zwischen einer Gelöst-Position und mehreren Feststell-Positionen manuell bewegbar und dient dazu, das Verriegelungselement 11 gegen den zweiten Schenkel 22 der Hutschiene 20 zu drücken. Zur manuellen Betätigung weist der Feststellarm 13 einen Griffbereich 17 auf, welcher am distalen Ende des Feststellarms 13 ausgebildet ist. Im montierten Zustand stützt sich der Feststellarm 13 dabei in den einzelnen Feststell-Positionen mittels am Feststellarm 13 ausgebildete Feststellkonturen 14 gegen eine oder mehrere am Gehäuse 2 ausgebildete Gehäusekontur(en) 24 (siehe Figuren 5 bis 7) ab, wodurch in den Feststell-Positionen eine auf das Verriegelungselement 11 in Richtung der Verriegelungsposition wirkende erste Verriegelungskraft erzeugt wird. Erfindungsgemäß ist diese erste Verriegelungskraft in den einzelnen Feststell-Positionen unterschiedlich groß bemessen. Auf diese Weise kann - in Abhängigkeit der Fertigungstoleranzen des Gehäuses 2 sowie der Hutschiene 20 - die jeweils erforderliche erste Verriegelungskraft durch Wahl einer geeigneten Feststell-Position angepasst werden. In der Gelöst-Position wird hingegen keine Kraft auf das Verriegelungselement 11 ausgeübt.

Zur verliersicheren Befestigung weist die Befestigungsvorrichtung 10 eine formschlüssig wirkende Verliersicherung 16 auf, welche seitlich an den ersten Abschnitt angeformt ist und im montierten Zustand mit einer hinsichtlich ihrer Lage und Form korrespondierenden Gehäusekontur formschlüssig verrastet, so dass das Verriegelungselement 11 - im montierten Zustand - lediglich zwischen seiner Verriegelungsposition und seiner Montageposition, nicht aber über die Montageposition hinaus, verschiebbar ist.

Im Bereich des ersten Abschnitts weist die Befestigungsvorrichtung 10 ferner ein mäanderförmig ausgebildetes Federelement 15 auf, welches an das Verriegelungselement 11 angerformt ist und sich im montierten Zustand der Befestigungsvorrichtung 10 am Gehäuse 2 des Reiheneinbaugerätes 1 abstützt. Dabei übt das Federelement 15 eine zweite Verriegelungskraft auf das Verriegelungselement 11 aus, welche unabhängig von der Position der - vorliegend als Feststellarm 13 ausgebildeten - Feststelleinrichtung auf das Verriegelungselement 11 wirkt. Vorteilhafter Weise ist die zweite Verriegelungskraft dabei deutlich kleiner als die mit Hilfe der Feststelleinrichtung maximal erreichbare erste Verriegelungskraft. Auf diese Weise kann das Reiheneinbaugerät 1 mit relativ geringem Kraftaufwand an der Trag- bzw. Hutschiene 20 verrastet werden. Der Festsitz des Reiheneinbaugerätes 1 an der Hutschiene 20 wird dann aber erst über die von der Feststelleinrichtung aufgebrachten ersten Verriegelungskraft realisiert.

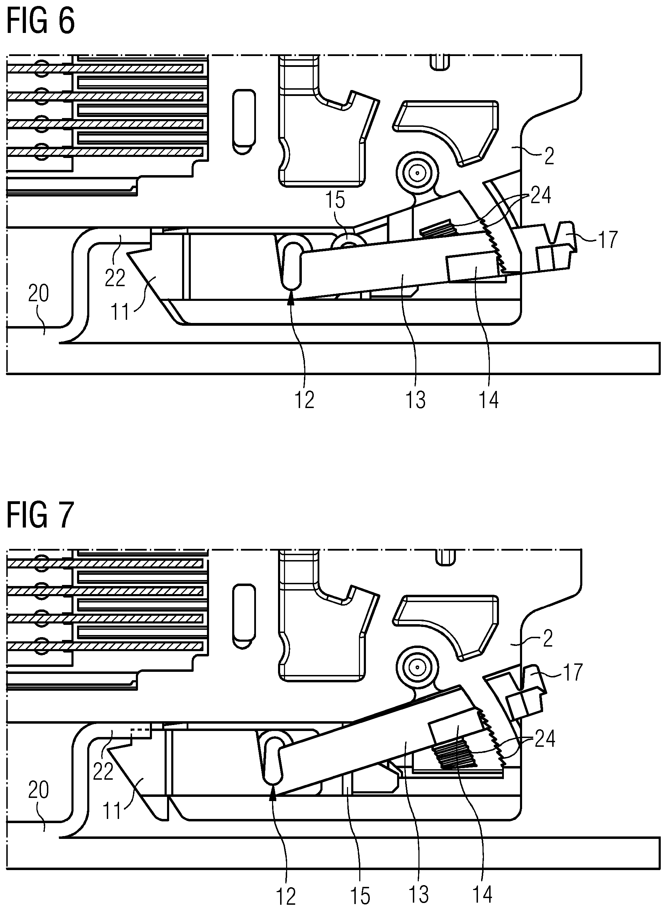

Die Figuren 5 bis 7 zeigen schematische Detaildarstellungen der vorstehend beschriebenen, erfindungsgemäßen Befestigungsvorrichtung 10 gemäß dem in Figur 4 dargestellten ersten Ausführungsbeispiel in verschiedenen Montagezuständen. Zur besseren Veranschaulichung ist das Gehäuse 2 dabei jeweils im Schnitt dargestellt, um einen Blick auf die Innenseite des Gehäuses zu ermöglichen. Figur 5 zeigt dabei die am Gehäuse 2 montierte Befestigungsvorrichtung 10 mit dem Verriegelungselement 11 in der Verriegelungsposition, d.h. das Reiheneinbaugerät 1 ist an der Trag- bzw. Hutschiene 20 verrastet. Die vorliegend als Hebelarm 13 ausgebildete Feststelleinrichtung befindet sich in ihrer Gelöst-Position, d.h. über den Hebelarm 13 wird keine erste Verriegelungskraft auf das Verriegelungselement 11 ausgeübt. Figur 6 stellt hinsichtlich der Verriegelungsposition eine Zwischenposition dar, bei der der Feststellarm 13 ein Stück weit hochgezogen ist und eine "mittlere" Verriegelungsposition einnimmt, welche bewirkt, dass das Verriegelungselement 11 mit einer "mittleren" ersten Verriegelungskraft nach links gegen den zweiten Schenkel 22 der Hutschiene 20 gedrückt wird. In Figur 7 ist schließlich eine "maximale" Verriegelungsposition dargestellt, bei der der Feststellarm 13 eine Endposition einnimmt, in der das Verriegelungselement 11 mit der maximal möglichen ersten Verriegelungskraft nach links gegen den zweiten Schenkel 22 der Hutschiene 20 gedrückt wird.

In diesem ersten Ausführungsbeispiel sind die Feststell-Positionen durch Rastverbindungen realisiert. Hierzu ist die am Gehäuse 2 des Reiheneinbaugerätes 1 ausgebildete Gehäusekontur 24 als Rastkontur ausgebildet, welche mit den am Hebelarm 13 ausgebildeten Feststellkonturen 14 derart zusammenwirkt, dass zwischen dem Hebelarm 13 und dem Gehäuse 2 eine Rastverbindung gebildet ist. Diese Rastverbindung kann dabei mehrere diskrete Feststell-Positionen einnehmen, ähnlich einer durch einen Kabelbinder gebildeten Rastverbindung. Die Gehäusekontur 24 ist dabei konstruktiv derart gestaltet, dass der bei der Zustellbewegung der Befestigungsvorrichtung 10 in Richtung der Hutschiene 20 zurückgelegte Zustellweg in Abhängigkeit der unterschiedlichen Feststell-Positionen der gebildeten Rastverbindung unterschiedlich groß ist, so dass in jeder der Feststell-Positionen jeweils eine unterschiedlich große erste Verriegelungskraft resultiert.

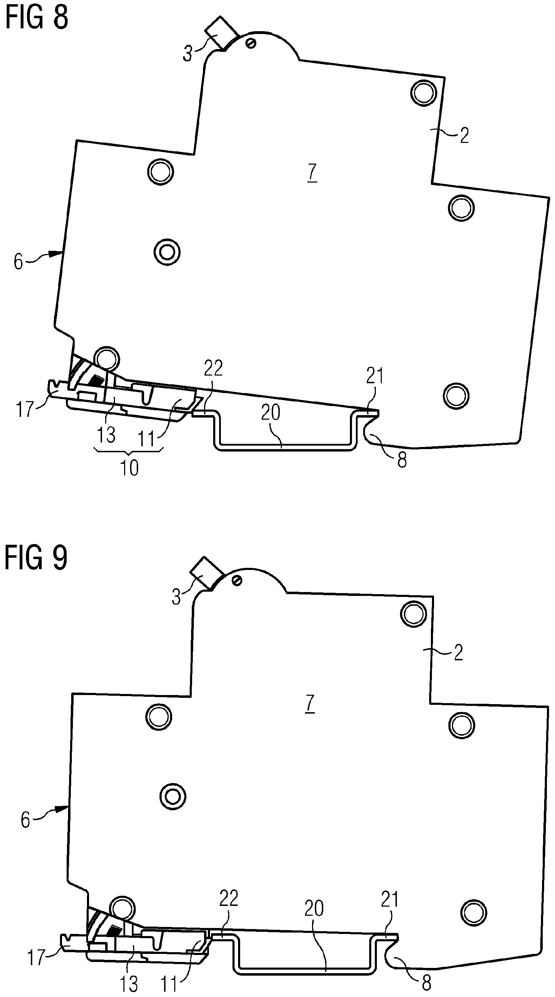

Korrespondierend zu den Detaildarstellungen der Figuren 4 bis 7 zeigen die Figuren 8 bis 11 schematische Seitenansichten des erfindungsgemäßen Reiheneinbaugerätes 1 mit der vorstehend beschriebenen, erfindungsgemäßen Befestigungsvorrichtung 10 des ersten Ausführungsbeispiels, wiederum in verschiedenen Montagezuständen. Figur 8 zeigt dabei das Reiheneinbaugerät 1 zu einem Zeitpunkt, bei dem die Haltenase 8 bereits am rechts dargestellten ersten Schenkel 21 der Hutschiene 20 eingehängt ist. Am links dargestellten zweiten Schenkel 22 ist die Befestigungsvorrichtung 10 jedoch erst an den zweiten Schenkel 22 angesetzt, das Verriegelungselement 11 -durch das mäanderförmige Federelement 15 mit der zweiten Verriegelungskraft beaufschlagt - befindet sich in seiner Verriegelungsposition.

Wird das Reiheneinbaugerät 1 nun, wie in Figur 9 dargestellt, gegen die Hutschiene 20 gedrückt, so wird das Verriegelungselement 11 durch den Kontakt mit dem zweiten Schenkel 22 der Hutschiene 20 gegen die Kraft des mäanderförmigen Federelements 15 in seine Montage-Position gedrückt. Da damit die gesamte Befestigungsvorrichtung 10 nach links bewegt wird, wird der am distalen Ende des Feststellarm 13 ausgebildete Griffbereich 17 seitlich aus der Schmalseite 6 des Gehäuses 2 herausgedrückt. Der Feststellarm 13 befindet sich in seiner Gelöst-Position.

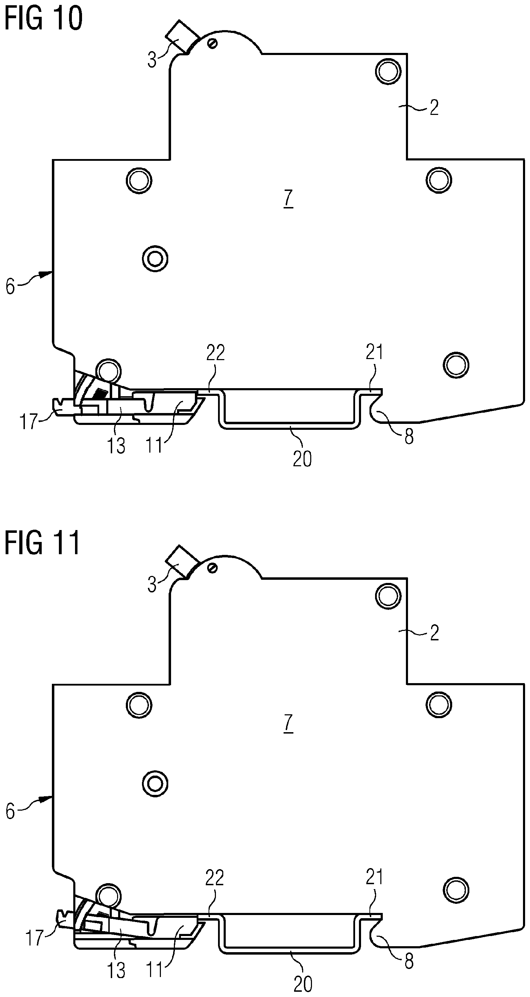

In Figur 10 ist das Reiheneinbaugerät 1 an der Hutschiene 20 verrastet, d.h. die Haltenase 8 ist am ersten Schenkel 21 der Hutschiene 20 formschlüssig eingehängt, und auch das Verriegelungselement 11 hintergreift den zweiten Schenkel 22 der Hutschiene 20 formschlüssig. Das Verriegelungselement 11, und damit die gesamte Befestigungsvorrichtung 10, wird dabei von der durch das mäanderförmige Federelement 15 aufgebrachten zweiten Verriegelungskraft in Richtung der Hutschiene 20 gedrückt. Die Feststelleinrichtung in Gestalt des Feststellarms 13 befindet sich weiterhin in seiner Gelöst-Position.

In Figur 11 ist das Reiheneinbaugerät 1 schließlich in seiner finalen Montageposition gezeigt: wie bereits in Figur 10 ist das Reiheneinbaugerät 1 dabei formschlüssig an der Hutschiene 20 verrastet, d.h. das Verriegelungselement 11 - unter anderem beaufschlagt mit der vom mäanderförmigen Federelement 15 hervorgerufenen zweiten Verriegelungskraft - befindet sich in seiner Verriegelungsposition. Im Unterschied zu Figur 10 wurde jedoch die als Feststellarm 13 ausgebildete Feststelleinrichtung von seiner Gelöst-Position in seine Feststell-Position verbracht: dabei stützt sich der Feststellarm 13 mittels der daran ausgebildeten Feststellkontur 14 an der am Gehäuse 2 ausgebildeten Gehäusekontur 24 ab, wodurch auf das Verriegelungselement 11 zusätzlich die in Richtung der Verriegelungsposition wirkende erste Verriegelungskraft ausgeübt wird, um einen ausreichenden Festsitz des Reiheneinbaugerätes 1 an der Hutschiene 20 zu gewährleisten.

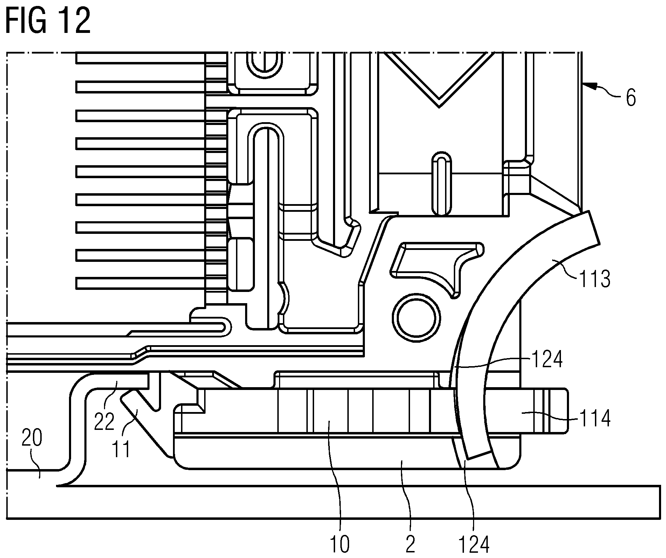

In Figur 12 ist ein zweites Ausführungsbeispiel der erfindungsgemäßen Befestigungsvorrichtung 10 schematisch dargestellt. Hierbei weist die Befestigungsvorrichtung 10 wiederum ein Verriegelungselement 11 sowie eine mit diesem gekoppelte Feststelleinrichtung auf. Im Unterschied zum ersten Ausführungsbeispiel ist die Feststelleinrichtung in diesem zweiten Ausführungsbeispiel als gekrümmter, keilförmiger Splint 113 ausgebildet. Der Splint 113 ist in einen im Gehäuse 2 ausgebildeten Kanal 124, welcher an die Form des Splints 113 angepasst ist, einführbar. Der Kanal 124 dient einerseits zur Führung des Splints 113, andererseits ist hierüber auch die Abstützung des Splints 113 am Gehäuse 2 realisiert. Am Austrittsende des Kanals 124 trifft der Splint 113 auf eine in der Befestigungsvorrichtung 10 ausgebildete Öffnung 114. Beim Einführen des Splints 113 in die Öffnung 114 wird auf die Befestigungsvorrichtung 10 - und damit auf das Verriegelungselement 11 - eine erste Verriegelungskraft ausgeübt, welche aufgrund der keilförmigen Gestaltung des Splints 113 umso größer ist, je weiter der Splint 113 in die Öffnung 114 eingeführt wird. Auf diese Weise ist eine stufenlos einstellbare erste Verriegelungskraft erzeugbar.

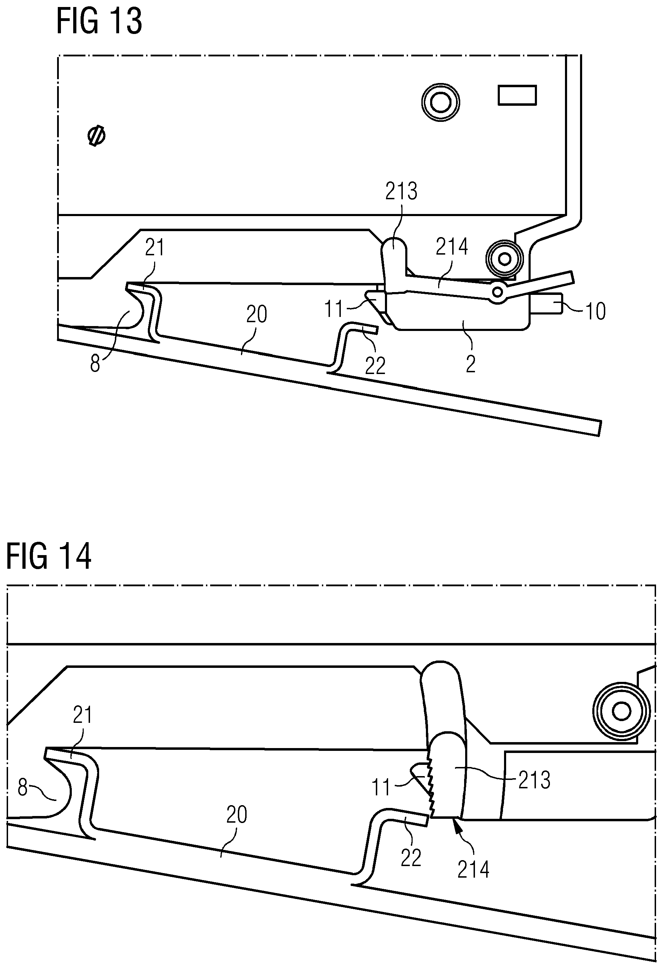

Die Figuren 13 und 14 zeigen schematisch ein weiteres, drittes Ausführungsbeispiel der erfindungsgemäßen Befestigungsvorrichtung 10. Die Befestigungsvorrichtung 10 weist wiederum das bereits aus den vorstehend beschriebenen Ausführungsbeispielen bekannte Verriegelungselement 11 sowie eine Feststelleinrichtung auf. Im Unterschied zu den vorstehend beschriebenen Ausführungsbeispielen ist die Feststelleinrichtung in diesem Ausführungsbeispiel jedoch als Keil 213 ausgebildet, welcher mit Hilfe eines manuell betätigbaren Hebelarms 214 in einen im Verriegelungselement 11 ausgebildete Öffnung 224 geschwenkt wird. Dabei wird das Verriegelungselement 11 mit der ersten Verriegelungskraft beaufschlagt und gegen den zweiten Abschnitt 22 der Hutschiene 20 gedrückt, um auf diese Weise den Festsitz des Reiheneinbaugerätes 1 an der Hutschiene 20 zu realisieren. Die zum Verriegelungselement 11 weisende Kontaktfläche des Keils 213 kann dabei entweder glatt oder gestuft ausgeführt sein, so dass mit der Bewegung des Keils 213 sowohl eine kontinuierlich steigende als auch eine diskontinuierlich, d.h. in diskreten Schritten, steigende Verriegelungskraft erzeugbar ist.

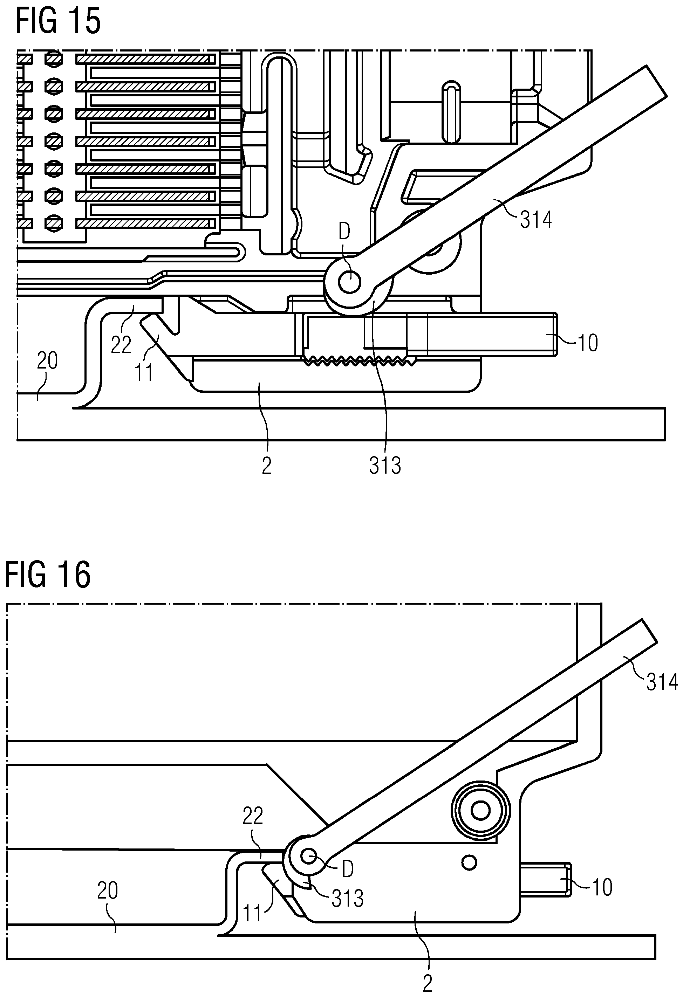

In den Figuren 15 und 16 sind ein viertes bzw. fünftes Ausführungsbeispiel der erfindungsgemäßen Befestigungsvorrichtung 10 schematisch dargestellt, wobei die Befestigungsvorrichtung 10 in beiden Fällen wiederum ein Verriegelungselement 11 sowie eine mit diesem gekoppelte Feststelleinrichtung aufweist. Im Unterschied zu den vorherigen Ausführungsbeispielen ist die Feststelleinrichtung in diesen beiden Ausführungsbeispielen nun jedoch als um eine Drehachse D drehbar gelagerter Exzenter 313 mit einem daran angeformten, manuell betätigbaren Hebelarm 314 ausgebildet. In dem in Figur 15 dargestellten vierten Ausführungsbeispiel ist der Exzenter 313 mit dem Verriegelungselement 11 drehbeweglich gekoppelt, so dass bei Betätigung des Hebelarms 314 das Verriegelungselement 11 durch den Exzenter 313 sowohl in Richtung des zweiten Schenkels 22 der Hutschiene 20 als auch gegen eine am Gehäuse 2 des Reiheneinbaugerätes 1 ausgebildete Gehäusekontur 324 gedrückt wird, um auf diese Weise die für den Festsitz des Reiheneinbaugeräts 1 an der Hutschiene 20 erforderliche erste Verriegelungskraft zu erzeugen. Im Unterschied dazu ist in dem in Figur 16 dargestellten fünften Ausführungsbeispiel die Drehachse D des Exzenters 313 unmittelbar benachbart zum zweiten Schenkel 22 der Hutschiene 20 angeordnet, so dass der Exzenter 313 bei Betätigung des Hebelarms 314 unmittelbar gegen die Stirnseite des zweiten Schenkels 22 der Hutschiene drückt, wodurch die für den Festsitz des Reiheneinbaugerätes 1 erforderliche erste Verriegelungskraft aufgebracht wird.

Allen vorstehend beschriebenen Ausführungsbeispielen ist gemein, dass nach dem Aufschnappen des Reiheneinbaugerätes 1 auf die Hutschiene 20 durch Betätigen der manuell betätigbaren Feststelleinrichtung - sei es in der Ausführung als manuell verrastbarer Feststellarm 13, als Splint 113, als Keil 213 oder als Exzenter 313 - eine Verkleinerung des fertigungs- und montagebedingten Spiels zwischen dem Gehäuse 2 des Reiheneinbaugerätes 1 und der Hutschiene 20 bewirkt wird. Je weiter dabei die Feststelleinrichtung bewegt wird, desto kleiner - kontinuierlich oder in diskreten Schritten - wird das Spiel, bis ein ausreichender Festsitz des Reiheneinbaugerätes 1 an der Hutschiene 20 realisiert ist.

### Bezugszeichenliste:

- 1: Reiheneinbaugerät
- 2: Gehäuse
- 3: Betätigungselement
- 4: Frontseite
- 5: Befestigungsseite
- 6: Schmalseite
- 7: Breitseite
- 8: Haltenase
- 9: Schraubklemme
- 10: Befestigungsvorrichtung
- 11: Verriegelungselement
- 12: Filmscharnier
- 13: Feststellarm
- 14: Feststellkontur
- 15: Federelement
- 16: Verliersicherung
- 17: Griffbereich
- 20: Hutschiene
- 21: erste Schenkel
- 22: zweiter Schenkel
- 24: Gehäusekontur
- 25: Anschlussleiter
- 113: Splint
- 114: Öffnung
- 124: Kanal
- 213: Keil
- 214: Hebelarm
- 223: Öffnung
- 313: Exzenter
- 314: Hebelarm
- 324: Gehäusekontur

- B_{H}: Breite Hutschiene
- B_{B}: Breite/Öffnungsmaß Reiheneinbaugerät
- D: Drehachse

## Patentansprüche

1. Befestigungsvorrichtung (10) zur Befestigung eines Gehäuses (2) eines elektrischen Reiheneinbaugerätes (1) an einer Tragschiene (20), aufweisend ein Verriegelungselement (11), welches an einer Befestigungsseite (5) des Gehäuses (2) montierbar und im montierten Zustand zwischen einer Montageposition und einer Verriegelungsposition verschiebbar ist,
**gekennzeichnet durch**
eine mit dem Verriegelungselement (11) gekoppelte, manuell betätigbare Feststelleinrichtung (13, 113, 213, 313), welche zwischen einer Gelöst-Position und mehreren Feststell-Positionen verstellbar ist, wobei sich die Feststelleinrichtung im montierten Zustand der Befestigungsvorrichtung (10) am Gehäuse (2) abstützt, wodurch in den Feststellpositionen auf das Verriegelungselement (11) eine in Richtung der Verriegelungsposition wirkende erste Verriegelungskraft erzeugbar ist, welche je nach Feststell-Position unterschiedlich groß ist.

2. Befestigungsvorrichtung (10) nach Anspruch 1,
**dadurch gekennzeichnet,**
**dass** die Feststelleinrichtung einen Keil (113, 213) oder Exzenter (313) aufweist, welcher zwischen der Gelöst-Position und den mehreren Feststell-Positionen verstellbar ist.

3. Befestigungsvorrichtung (10) nach einem der Ansprüche 1 oder 2, **dadurch gekennzeichnet,**
**dass** die Feststelleinrichtung als Rasteinrichtung ausgebildet ist, welche zwischen der Gelöst-Position und den mehreren Feststell-Positionen verstellbar ist.

4. Befestigungsvorrichtung (10) nach Anspruch 3,
**dadurch gekennzeichnet,**
**dass** die Rasteinrichtung ein Hebelelement (13, 214, 314) aufweist, welches drehbeweglich mit dem Verriegelungselement (11) gekoppelt ist, sich am Gehäuse (2) abstützt und zwischen der Gelöst-Position und den mehreren Feststell-Positionen verstellbar ist, um auf das Verriegelungselement (11) die erste Verriegelungskraft auszuüben.

5. Befestigungsvorrichtung (10) nach Anspruch 4,
**dadurch gekennzeichnet,**
**dass** das Hebelelement (13) über ein Filmscharnier (12) drehbeweglich mit dem Verriegelungselement (11) gekoppelt ist.

6. Befestigungsvorrichtung (10) nach einem der vorherigen Ansprüche, **dadurch gekennzeichnet, dass** die Befestigungsvorrichtung (10) ein mit dem Verriegelungselement (11) gekoppeltes Federelement (15) zum Erzeugen einer in Richtung der Verriegelungsposition wirkenden zweiten Verriegelungskraft aufweist.

7. Modulares Reiheneinbaugerät (1),
- mit einem Gehäuse (2) , aufweisend eine Frontseite (4), einer der Frontseite (4) gegenüberliegende Befestigungsseite (5), sowie die Front- und die Befestigungsseite (4, 5) verbindende Schmal- und Breitseiten (6, 7),
- mit einer an der Befestigungsseite (5) am Gehäuse (2) montierten Befestigungsvorrichtung (10) zur Befestigung des Reiheneinbaugerätes (1) an einer Tragschiene (20), aufweisend ein Verriegelungselement (11), welches zwischen einer Montageposition und einer Verriegelungsposition verschiebbar gelagert ist,
**dadurch gekennzeichnet,**
**dass** die Befestigungsvorrichtung (10) eine mit dem Verriegelungselement (11) gekoppelte, manuell betätigbare Feststelleinrichtung (13, 113, 213, 313) aufweist, welche sich am Gehäuse (2) abstützt und zwischen einer Gelöst-Position und mehreren Feststell-Positionen verstellbar ist, wobei in den Feststellpositionen auf das Verriegelungselement (11) eine in Richtung der Verriegelungsposition wirkende (erste) Verriegelungskraft ausgeübt wird, welche je nach Feststell-Position unterschiedlich groß ist.

8. Reiheneinbaugerät (1) nach Anspruch 7,
**dadurch gekennzeichnet,**
**dass** die Feststelleinrichtung einen Keil (113, 214) oder Exzenter (313) aufweist, welcher zwischen der Gelöst-Position und den mehreren Feststell-Positionen verstellbar ist.

9. Reiheneinbaugerät (1) nach einem der Ansprüche 7 oder 8,
**dadurch gekennzeichnet,**
**dass** die Feststelleinrichtung als Rasteinrichtung ausgebildet ist, welche zwischen der Gelöst-Position und mehreren Feststell-Positionen verstellbar ist.

10. Reiheneinbaugerät (1) nach Anspruch 9,
**dadurch gekennzeichnet,**
**dass** die Rasteinrichtung ein Hebelelement (13, 214, 314) aufweist, welches drehbeweglich mit dem Verriegelungselement (11) gekoppelt ist, sich am Gehäuse (2) abstützt und zwischen der Gelöst-Position und den mehreren Feststell-Positionen verstellbar ist, um auf das Verriegelungselement (11) die erste Verriegelungskraft auszuüben.

11. Reiheneinbaugerät (1) nach einem der Ansprüche 7 bis 10,
**dadurch gekennzeichnet,**
**dass** die Befestigungsvorrichtung (10) ein mit dem Verriegelungselement (11) gekoppeltes Federelement (15) zum Erzeugen einer in Richtung der Verriegelungsposition wirkenden zweiten Verriegelungskraft aufweist.

12. Reiheneinbaugerät (1) nach einem der Ansprüche 7 bis 11,
**dadurch gekennzeichnet,**
**dass** mehrere Befestigungsvorrichtungen (10) zur Befestigung des Reiheneinbaugerätes (1) an der Tragschiene (20) an der Befestigungsseite (5) des Gehäuses (2) angeordnet sind.

## Claims

1. Fastening apparatus (10) for fastening a housing (2) of an electrical series installation device (1) to a support rail (20), having a locking element (11) which is fittable on a fastening side (5) of the housing (2) and, in the fitted state, is displaceable between a fitting position and a locking position,
**characterized by**
a manually actuatable fixing device (13, 113, 213, 313) which is coupled to the locking element (11) and which is adjustable between a released position and multiple fixing positions, wherein the fixing device is supported against the housing (2) in the fitted state of the fastening apparatus (10), whereby, in the fixing positions, a first locking force acting in the direction of the locking position is able to be generated on the locking element (11), said first locking force differing in magnitude according to the fixing position.

2. Fastening apparatus (10) according to Claim 1,
**characterized**
**in that** the fixing device has a wedge (113, 213) or an eccentric (313) that is adjustable between the released position and the multiple fixing positions.

3. Fastening apparatus (10) according to either of Claims 1 and 2, **characterized in that** the fixing device is designed as a latching device which is adjustable between the released position and the multiple fixing positions.

4. Fastening apparatus (10) according to Claim 3,
**characterized**
**in that** the latching device has a lever element (13, 214, 314) which is coupled rotatably to the locking element (11), is supported against the housing (2) and is adjustable between the released position and the multiple fixing positions in order to exert the first locking force on the locking element (11).

5. Fastening apparatus (10) according to Claim 4,
**characterized**
**in that** the lever element (13) is coupled rotatably to the locking element (11) via a film hinge (12).

6. Fastening apparatus (10) according to one of the preceding claims,
**characterized**
**in that** the fastening apparatus (10) has a spring element (15) which is coupled to the locking element (11) and which serves for generating a second locking force acting in the direction of the locking position.

7. Modular series installation device (1),
- having a housing (2) which has a front side (4), has a fastening side (5) which is situated opposite the front side (4), and has narrow and wide sides (6, 7) which connect the front and fastening sides (4, 5),
- having a fastening apparatus (10) which is fitted on the housing (2) on the fastening side (5) and which serves for fastening the series installation device (1) to a support rail (20) and which has a locking element (11) which is mounted so as to be displaceable between a fitting position and a locking position,
**characterized**
**in that** the fastening apparatus (10) has a manually actuatable fixing device (13, 113, 213, 313) which is coupled to the locking element (11) and which is supported against the housing (2) and which is adjustable between a released position and multiple fixing positions, wherein, in the fixing positions, a (first) locking force acting in the direction of the locking position is exerted on the locking element (11), said locking force differing in magnitude according to the fixing position.

8. Series installation device (1) according to Claim 7,
**characterized**
**in that** the fixing device has a wedge (113, 214) or an eccentric (313) that is adjustable between the released position and the multiple fixing positions.

9. Series installation device (1) according to either of Claims 7 and 8,
**characterized**
**in that** the fixing device is designed as a latching device which is adjustable between the released position and multiple fixing positions.

10. Series installation device (1) according to Claim 9,
**characterized**
**in that** the latching device has a lever element (13, 214, 314) which is coupled rotatably to the locking element (11), is supported against the housing (2) and is adjustable between the released position and the multiple fixing positions in order to exert the first locking force on the locking element (11).

11. Series installation device (1) according to one of Claims 7 to 10,
**characterized**
**in that** the fastening apparatus (10) has a spring element (15) which is coupled to the locking element (11) and which serves for generating a second locking force acting in the direction of the locking position.

12. Series installation device (1) according to one of Claims 7 to 11,
**characterized**
**in that** multiple fastening apparatuses (10) for fastening the series installation device (1) to the support rail (20) are arranged on the fastening side (5) of the housing (2).

## Revendications

1. Dispositif de fixation (10) destiné à la fixation d'un boîtier (2) d'un appareil électrique encastrable en série (1) au niveau d'un rail porteur (20), présentant un élément de verrouillage (11) qui peut être monté au niveau d'une face de fixation (5) du boîtier (2) et peut être déplacé à l'état monté entre une position de montage et une position de verrouillage, **caractérisé par** un équipement de blocage (13, 113, 213, 313) actionnable manuellement et couplé à l'élément de verrouillage (11), lequel équipement de blocage est réglable entre une position débloquée et plusieurs positions de blocage, dans lequel l'équipement de blocage s'appuie au niveau du boîtier (2) à l'état monté du dispositif de fixation (10), moyennant quoi une première force de verrouillage agissant dans la direction de la position de verrouillage peut être générée dans les positions de blocage sur l'élément de verrouillage (11), laquelle force de verrouillage est différente selon la position de blocage.

2. Dispositif de fixation (10) selon la revendication 1, **caractérisé en ce que** l'équipement de blocage présente une cale (113, 213) ou un excentrique (313), lequel est réglable entre la position débloquée et les plusieurs positions de blocage.

3. Dispositif de fixation (10) selon l'une quelconque des revendications 1 ou 2, **caractérisé en ce que** l'équipement de blocage est configuré en tant qu'équipement d'encliquetage, lequel est réglable entre la position débloquée et les plusieurs positions de blocage.

4. Dispositif de fixation (10) selon la revendication 3, **caractérisé en ce que** l'équipement d'encliquetage présente un élément de levier (13, 214, 314), lequel est couplé de manière mobile en rotation à l'élément de verrouillage (11), s'appuie au niveau du boîtier (2) et est réglable entre la position débloquée et les plusieurs positions de blocage pour exercer la première force de verrouillage sur l'élément de verrouillage (11).

5. Dispositif de fixation (10) selon la revendication 4, **caractérisé en ce que** l'élément de levier (13) est couplé de manière mobile en rotation à l'élément de verrouillage (11) par le biais d'une charnière à film (12).

6. Dispositif de fixation (10) selon l'une quelconque des revendications précédentes, **caractérisé en ce que** le dispositif de fixation (10) présente un élément de ressort (15) couplé à l'élément de verrouillage (11) destiné à générer une seconde force de verrouillage agissant dans la direction de la position de verrouillage.

7. Appareil encastrable modulaire (1),
- avec un boîtier (2), présentant une face avant (4), une face de fixation (5) opposée à la face avant (4) ainsi qu'une face étroite et une face large (6, 7) reliant la face avant et la face de fixation (4, 5),
- avec un dispositif de fixation (10) monté au niveau du boîtier (2) au niveau de la face de fixation (5) destiné à la fixation de l'appareil encastrable en série (1) au niveau d'un rail porteur (20), présentant un élément de verrouillage (11), lequel est logé de manière mobile entre une position de montage et une position de verrouillage,
**caractérisé en ce que** le dispositif de fixation (10) présente un équipement de blocage (13, 113, 213, 313) actionnable manuellement et couplé à l'élément de verrouillage (11), lequel s'appuie au niveau du boîtier (2) et est réglable entre une position débloquée et plusieurs positions de blocage, dans lequel dans les positions de blocage une (première) force de verrouillage agissant dans la direction de la position de verrouillage est exercée sur l'élément de verrouillage (11), laquelle force est différente selon la position de blocage.

8. Appareil encastrable en série (1) selon la revendication 7, **caractérisé en ce que** l'équipement de blocage présente une cale (113, 214) ou un excentrique (313), lequel est réglable entre la position débloquée et les plusieurs positions de blocage.

9. Appareil encastrable en série (1) selon l'une quelconque des revendications 7 ou 8, **caractérisé en ce que** l'équipement de blocage est configuré en tant qu'équipement d'encliquetage, lequel est réglable entre la position débloquée et plusieurs positions de blocage.

10. Appareil encastrable en série (1) selon la revendication 9, **caractérisé en ce que** l'équipement d'encliquetage présente un élément de levier (13, 214, 314), lequel est couplé de manière mobile en rotation à l'élément de verrouillage (11), s'appuie au niveau du boîtier (2) et est réglable entre la position débloquée et les plusieurs positions de blocage pour exercer la première force de verrouillage sur l'élément de verrouillage (11).

11. Appareil encastrable en série (1) selon l'une quelconque des revendications 7 à 10, **caractérisé en ce que** le dispositif de fixation (10) présente un élément de ressort (15) couplé à l'élément de verrouillage (11) destiné à générer une seconde force de verrouillage agissant dans la direction de la position de verrouillage.

12. Appareil encastrable en série (1) selon l'une quelconque des revendications 7 à 11, **caractérisé en ce que** plusieurs dispositifs de fixation (10) destinés à la fixation de l'appareil encastrable en série (1) au niveau du rail porteur (20) sont disposés au niveau de la face de fixation (5) du boîtier (2).
